# EUROPEAN PATENT APPLICATION

(11) **EP 4 629 503 A1**
(43) Date of publication of application: **08.10.2025**
(21) Application number: 24168556.9
(22) Date of filing: 04.04.2024
(51) Int. Cl.: H02P 25/18, H02P 25/22, H02K 3/28

(54) **RECONFIGURABLE SYNCHRONOUS MACHINE**

(71) Applicant: Hamilton Sundstrand Corporation, Charlotte, NC 28217 (US)
(72) Inventor: Sawata, Tadashi, Coventry (GB); Roadley-Battin, Jonathan Mark, Birmingham (GB)
(74) Representative: Dehns

(57) **Abstract**

A synchronous machine (300) comprises first (310a) and second (310b) sets of n-phase windings, wherein n ≥ 3, and wherein each set includes a first winding (A, A') and n-1 other windings, each winding having a first end and a second end. The first ends of the windings of the first set (310a) are electrically coupled to a first star point (315a). The first ends of the windings of the second set (310b) are electrically coupled to a second star point (315b). First inverter circuitry (320a) is electrically coupled to the second end of each of the n-1 other windings (B, C) of the first set (310a). A first switch (SW_A) is electrically coupled between the first inverter circuitry (320a) and the second end of the first winding (A) of the first set (310a). Second inverter circuitry (320b) is electrically coupled to the second end of each of the n-1 other windings (B', C') of the second set (310b). A second switch (SW_A'), distinct from the first switch (SW_A), is electrically coupled between the second inverter circuitry (320b) and the second end of the first winding (A') of the second set (310b). A third switch (SW_S) is electrically coupled between the second end of the first winding (A) of the first set (310a) and the second end of a first winding (A') of the second set (310b). Control circuitry (302) can switch the synchronous machine (300) between a parallel configuration in which first switch (SW_A) is closed, the second switch (SW_A') is closed, and the third switch (SW_S) is open, and a series configuration in which the first switch (SW_A) is open, the second switch (SW_A') is open, and the third switch (SW_S) is closed.

## Description

### FIELD

The present disclosure relates to a reconfigurable synchronous machine.

### BACKGROUND

Synchronous machines have many potential applications including aircraft electric propulsion. In an aircraft, a machine may be used both in a motoring mode (i.e. for propulsion) and, at other times, in a generating mode (i.e. for powering aircraft electrical systems). However, there can be competing demands for high power versus high torque from the machine at different stages of flight. It may also be challenging to accommodate variations in battery voltage depending on the charge state of the batteries.

Winding reconfiguration of synchronous machines is an established method to adjust the parameters and characteristics of electrical machines for a given operating condition. For example, a star-delta reconfiguration can be applied to induction machines to improve starting torque. However, conventional winding reconfiguration methods require many contactors or switches which increase the size and/or weight of the system as well as potentially decreasing reliability.

An improved reconfigurable synchronous machine is desired.

### SUMMARY

The disclosure provides a synchronous machine comprising:
a first set of n-phase windings, wherein n ≥ 3, and wherein the first set includes a first winding and n-1 other windings, each winding having a first end and a second end, and wherein the first ends of the windings of the first set are electrically coupled to a first star point;
a second set of n-phase windings, wherein n ≥ 3, and wherein the second set includes a first winding and n-1 other windings, each winding having a first end and a second end, and wherein the first ends of the windings of the second set are electrically coupled to a second star point;
first inverter circuitry electrically coupled to the second end of each of the n-1 other windings of the first set;
a first switch electrically coupled between the first inverter circuitry and the second end of the first winding of the first set;
second inverter circuitry electrically coupled to the second end of each of the n-1 other windings of the second set;
a second switch, distinct from the first switch, electrically coupled between the second inverter circuitry and the second end of the first winding of the second set;
a third switch electrically coupled between the second end of the first winding of the first set and the second end of a first winding of the second set; and
control circuitry for switching the wound field synchronous machine between a parallel configuration in which first switch is closed, the second switch is closed, and the third switch is open, and a series configuration in which the first switch is open, the second switch is open, and the third switch is closed.

The disclosure further provides a method of operating an electrical machine as disclosed herein, comprising switching the electrical machine between the parallel configuration and the series configuration.

The disclosure further provides an aircraft engine comprising a synchronous machine as disclosed herein.

In some examples, the synchronous machine may be a permanent magnet machine (e.g. an interior permanent magnet machine), or a wound field synchronous machine. In some examples, the machine is switchable between the parallel configuration and the series configuration by actuating exactly three switches (i.e. the first, second and third switches, and no further switches).

In some examples, n is a multiple of three (e.g. three, six, nine, etc.). In some examples, n = 3.

The first winding of the second set may be offset by 180 degrees from the first winding of the first set. Each of the n-1 other windings of the first set may be offset by 180 degrees from a respective winding of the n-1 other windings of the second set. Each winding of the first set may be configured to have an opposite polarity to a respective winding of the second set that is offset by 180 degrees from the winding of the first set.

The windings of the first set may be uniformly spaced around 360 degrees, and the windings of the second set may be uniformly spaced around 360 degrees. In particular, where n = 3, the windings of each set may be spaced at 120 degree intervals.

The synchronous machine may comprise an m-pole rotor. In some examples, m = 2.

The inverter circuitry may be provided by converter circuitry that also comprises rectification circuitry for use when the machine is operating in a generating mode.

Each of the first, second and third switches may be a respective two-pole (i.e. two-terminal, one-way) switch. Each switch may be a respective triac.

The first inverter circuitry may comprise n sets of switches, each set of switches being configured for controlling current flow to a respective winding of the first set of windings when the machine is in the parallel configuration. The second inverter circuitry may comprise n sets of switches, each set of switches being configured for controlling current flow to a respective winding of the second set of windings when the machine is in the parallel configuration. The control circuitry may be configured to control the switching of the sets of switches.

The first switch may be arranged on an electrical path between the set of switches configured for controlling current flow to the first winding of the first set of n-phase windings and the second end of the first winding of the first set. The second switch may be arranged on an electrical path between the set of switches configured for controlling current flow to the first winding of the second set of n-phase windings and the second end of the first winding of the second set.

The control circuitry may be configured, when the machine is in the series configuration, to control a current flow through the first windings of the first and second sets of windings by controlling the sets of switches of the first and second inverter circuitry that are for controlling current flow to the n-1 other windings of the first and second sets of windings.

The control circuitry may be configured, when the machine is in the series configuration, to deactivate the switches of the first inverter circuitry that are for controlling current flow to the first winding of the first set of windings (when the machine is in the parallel configuration). The control circuitry may be configured, when the machine is in the series configuration, to deactivate the switches of the second inverter circuitry that are for controlling current flow to the first winding of the second set of windings (when the machine is in the parallel configuration).

Features of any aspect or example described herein may, wherever appropriate, be applied to any other aspect or example described herein. Where reference is made to different examples or sets of examples, it should be understood that these are not necessarily distinct but may overlap.

### BRIEF DESCRIPTION OF THE DRAWINGS

Certain examples of the disclosure will now be described, by way of example only, with reference to the accompanying drawings, in which:
Fig. 1 is a phasor diagram of a synchronous machine in accordance with an example of the present disclosure.
Fig. 2 is an example circuit diagram for performing a winding reconfiguration in an example synchronous machine.
Fig. 3 is a circuit diagram of an example synchronous machine arranged to support winding reconfiguration in accordance with an example of the present disclosure.
Fig. 4 is a circuit diagram of the synchronous machine of Fig. 3 in a parallel configuration.
Fig. 5 is a plot of voltage phase waveforms for the synchronous machine of Fig. 3 when configured in parallel.
Fig. 6 is a circuit diagram of the synchronous machine of Fig. 3 in a series configuration.
Fig. 7 is a figurative circuit diagram showing current flows in the series configuration of the phase windings of the example synchronous machine.
Fig. 8 is a plot of voltage phase waveforms for the example synchronous machine when configured in series.
Fig. 9 is a flowchart depicting a method for switching the example synchronous machine to a series configuration in accordance with the present disclosure.
Fig. 10 is a flowchart depicting a method for switching the example synchronous machine to a parallel configuration in accordance with the present disclosure.

### DETAILED DESCRIPTION

In a high-power electrical drive system, a parallel electrical coupling of multiple 3-phase windings of an electrical machine (i.e. a motor and/or generator) and its controller (i.e. an inverter and/or rectifier) can be useful, e.g. for high phase currents required to meet power demand. A series configuration for the 3-phase connections between the electrical machine and its controller may also be useful, e.g. for situations where high torque is required. In such applications, the electrical machine may be wound with a multiple of 3-phase windings to decrease current value per channel to meet a practical current rating of the converter. While the examples below refers to 3-phase windings, the principles may be applied to other sets of n-phase windings more generally, where n ≥ 3.

In some example, the electrical machine is a synchronous machine, which may be a permanent (e.g. interior) magnet machine, or a wound field synchronous machine.

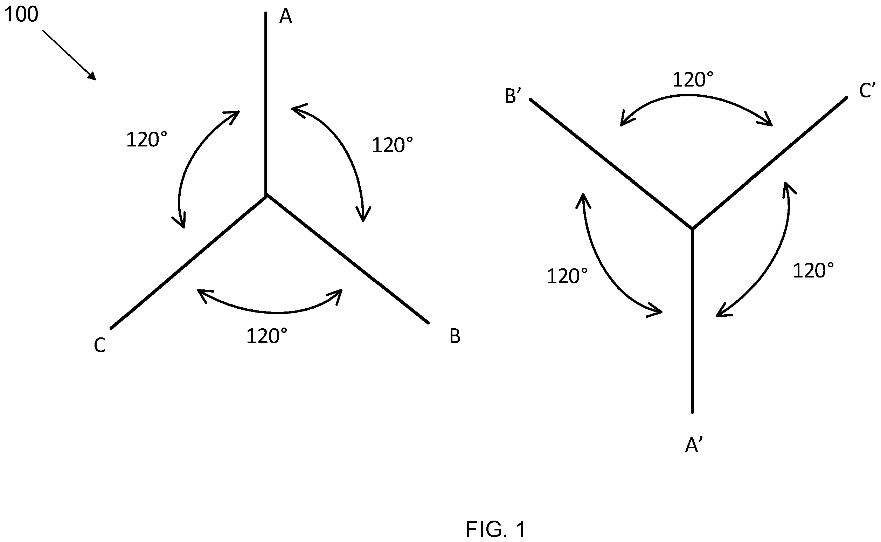

An example synchronous machine has a stator that is wound in a 2 x 3-phase configuration in which two sets of 3-phase windings are connected in opposite polarity. A two-pole rotor is arranged for rotation within the stator. Figure 1 shows a phasor diagram for this configuration, showing a first set of 3-phase windings, with the three phase windings labelled A, B, and C respectively. In the second set of 3-phase windings, each phase winding is labelled A', B', and C' respectively. The phases of the first 3-phase winding are offset by 120° from each other. Likewise, the phases of the second 3-phase winding are offset by 120° from each other. One advantage of this winding configuration is that the effective phase difference between phases of the two sets of windings becomes 60° which can be used to reduce ripples in DC-link hence reducing the size and weight of DC-link filter components.

Depending on operating conditions, it may be desirable to be able to switch the configuration of the windings from a series configuration to a parallel configuration, or vice versa.

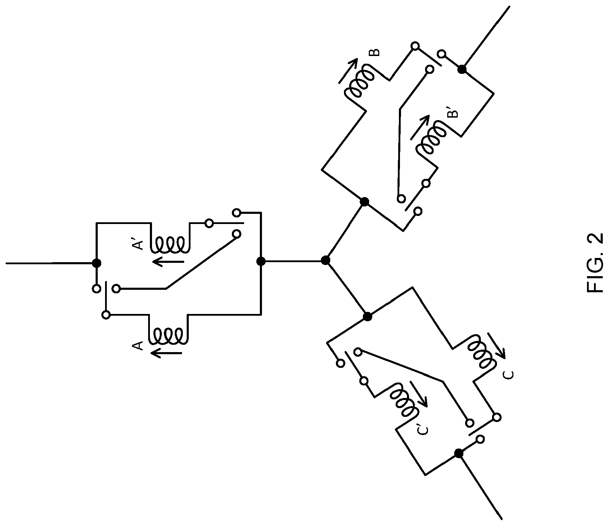

Figure 2 shows, for the sake of comparison, an example of a simplistic implementation for performing such a reconfiguration that requires six 3-pole (i.e. two-way) switches. The first ends of corresponding pairs of windings of each set of phase windings (i.e. A and A', B and B', C and C') are connected with three 3-pole switches, and the second ends of these pairs of windings are connected with a further three 3-pole switches. By toggling the pairs of switches, the two sets of windings can be reconfigured between a series and a parallel configuration. In this scheme, winding reconfigurations are done on a phase by phase basis, i.e. coils in each phase are reconfigured for series-parallel, requiring twice as many switches or contactors for reconfiguration as there are windings.

Certain examples will now be described which improve on this simplistic approach to performing winding reconfiguration by using two-pole (i.e. one-way) switches rather than 3-pole switches, and by requiring a smaller number of switches in total. This may reduce cost and/or size and/or weight. It may also improve reliability and/or lifetime.

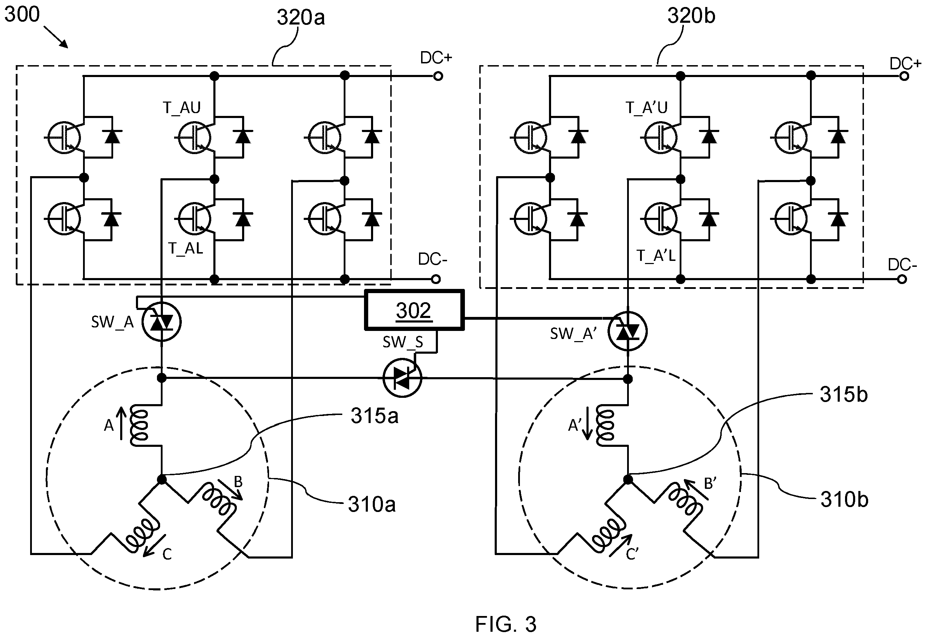

Figure 3 shows a synchronous machine 300 according to an example of the present disclosure. It has three 2-pole switches: a first switch SW_A, a second switch SW_A', and a third switch SW_S. These can be operated by control circuitry 302 for reconfiguring the windings between a parallel configuration and a series configuration. The control circuitry 302 may also control the switching of the transistors in the converter circuitry 320a, 320b.

The machine 300 in this example includes a first set of 3-phase windings 310a and a second set of 3-phase windings 310b. These may be arranged coaxially to form a single stator arrangement, within which a rotor is located, and are offset by 180 degrees as shown in Figure 1. The three phases of the first set of windings 310a are labelled A, B and C, whereas the three phases of the second set of windings 310b are labelled A', B' and C', corresponding to Figure 1.

The first set of windings 310a is arranged such that a first end of each of the coils of the first set meets at a first star point 315a, and the second set of windings 310b is arranged such that a first end of each of the coils of the second set meets at a second star point 315b. The first set of windings 310a are configured and controlled such that the current in each winding flows in an opposite direction to the direction of current flow in a respective opposite winding of the second set of windings 310b, as depicted by the arrows in Figure 3.

In addition to the first and second sets of windings 310a, 310b, the machine 300 also includes first converter circuitry 320a and second converter circuitry 320b. The converter circuitry 320a, 320b can perform inversion when the machine 300 is operating in motoring mode and rectification when the machine 300 is operating in a generating mode. Each of the first and second converter circuitry 320a, 320b comprises a set of transistors and diodes, and is electrically coupled to positive and negative DC rails, e.g. of the same DC bus. Thus, in a motoring mode, the machine may use energy supplied from a power source (e.g. a battery) connected along the DC rails to power the first and second sets of phase windings 310a, 310b. Then, in a generator mode, the first and second sets of phase windings 310a, 310b may charge the power source.

The control circuitry 302 can configure the machine 300 for a parallel configuration by closing the first switch SW_A, closing the second switch SW_A', and opening the third switch SW_S. It can configure the machine 300 for a series configuration by opening the first switch SW_A, opening the second switch SW_A', and closing the third switch SW_S.

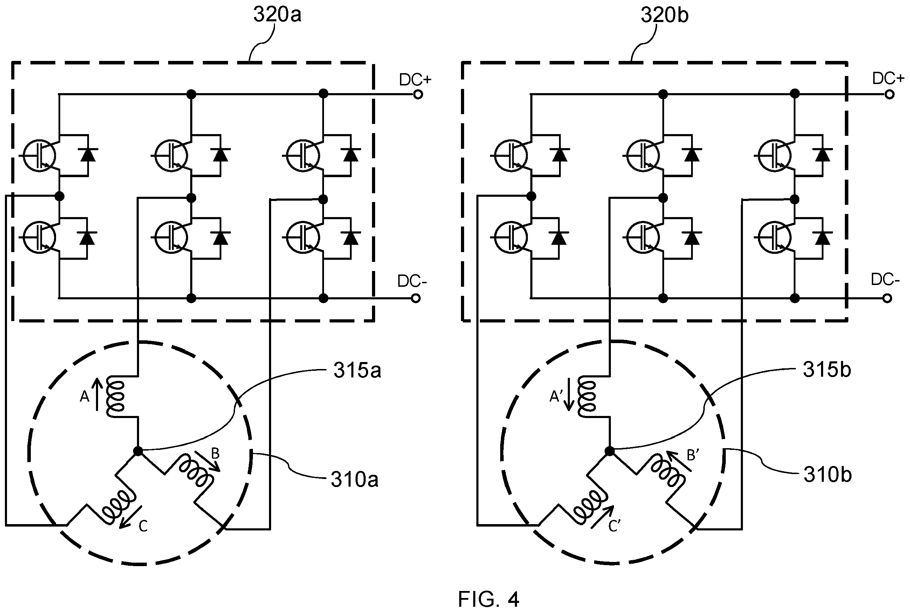

Figure 4 shows the parallel configuration. This parallel configuration may be used when the machine 300 is operating at high speeds and/or conditions where the available DC-link voltage is lower. Low DC-link voltage may occur when some of the batteries on board the aircraft are discharged. In the parallel configuration, the back-EMF of electrical machine can be reduced for a given operating speed enabling the converter to regulate phase currents to a desired value overcoming the back-EMF.

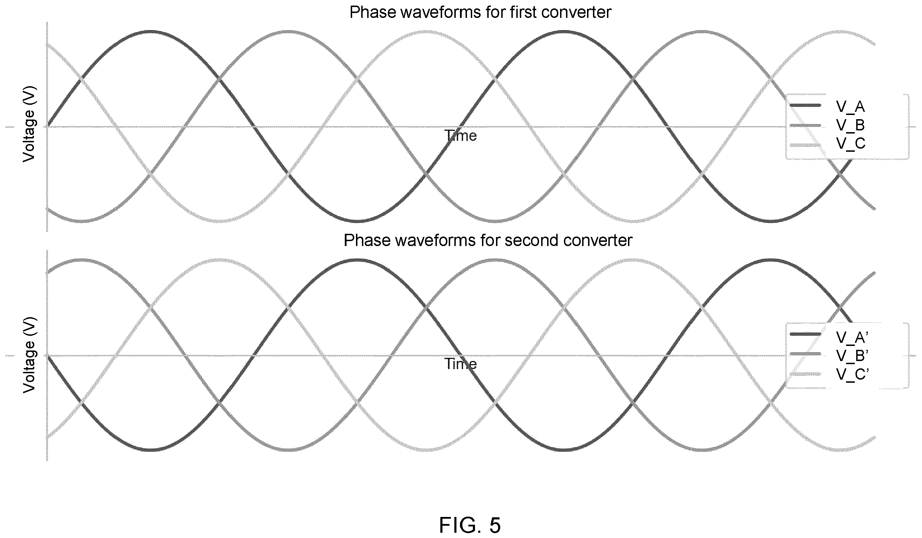

In the parallel configuration, the first converter circuitry 320a controls its load currents 120° separated, and the second converter circuitry 320b controls its load currents 120° separated, but the two converters are 180° offset from each other. This can ensure maximum mechanical torque generation as a result of the winding directions of the respective sets of phase windings 310a, 310b. This is shown in Figure 5, where the waveforms of voltage over time through the first and second converter circuitry 320a, 320b of the present example are displayed for each of the respective phase windings. Considering any corresponding pair of phase windings for each set of phase windings, the voltage waveforms are exactly 180° offset.

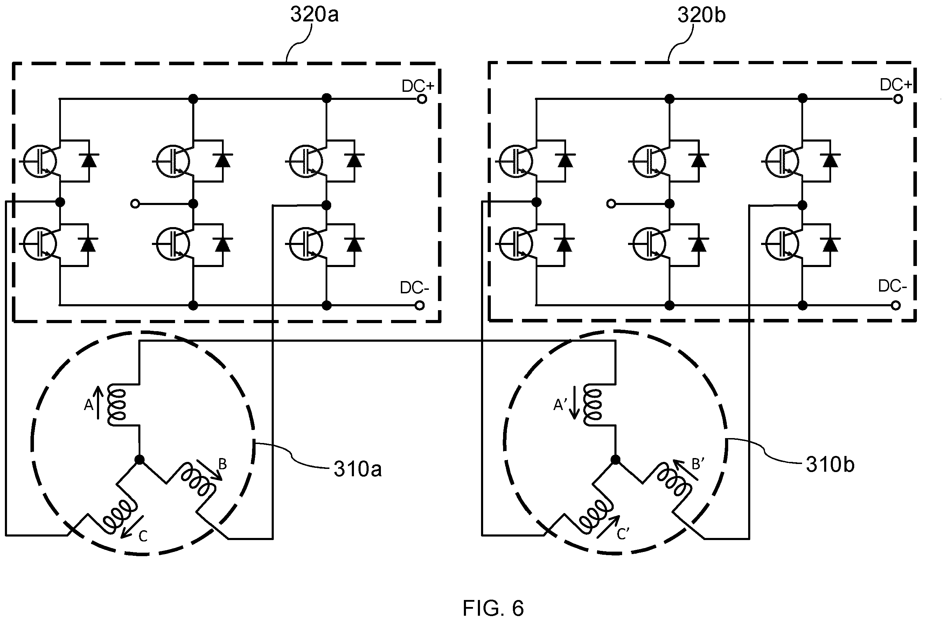

Figure 6 shows the series configuration. This may be used when operating at lower speeds and/or when DC-link voltage is sufficiently high. DC-link voltage may be high in scenarios where the batteries on board the aircraft have a high charge. In the series configuration, the two sets of 3-phase windings 310a, 310b, are connected in series by electrically coupling the A phase of the first set of 3-phase windings 310a with the A' phase of the second set of 3-phase windings 310b. To ensure a series connection is made, the ends of the A and A' windings that are electrically coupled to each other are also electrically uncoupled from the first and second converter circuitry 320a, 320b.

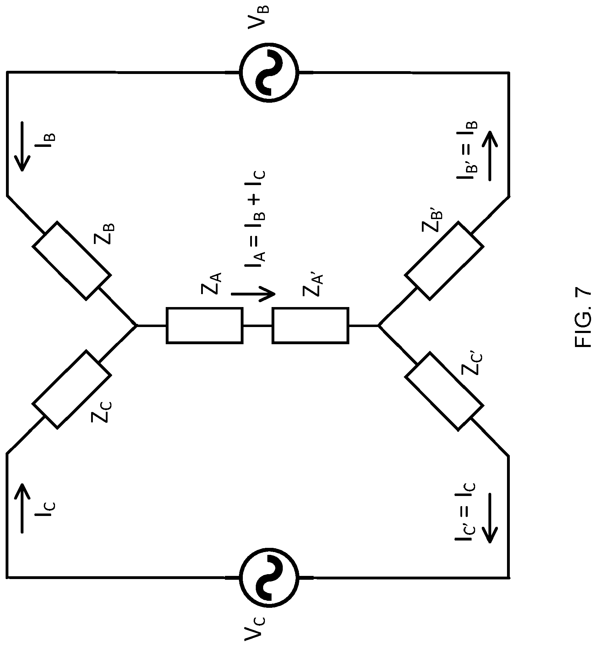

Figure 7 shows an example equivalent circuit diagram representing the current flow in the series configuration of the machine 300. It shows, using the electric circuit superimposing theorem, how three phase currents can be controlled for required values by regulating V_{B} (the voltage across the A and B windings) and Vc (the voltage across the A and C windings). In this series connected configuration, the two converter circuits 320a, 320b are directly controlling the phase current of two phases, as part of a bridge amplifier, while the current of the third phase is satisfied as a result of Kirchhoff's current law. The two converter circuits 320a, 320b are configured to control to the same set point in the direct-quadrature frame reference. However, the control of the output converter is negated for the second converter 320b to produce the bridged voltage waveforms to excite the series-connected machine with double the V_{dc} voltage.

By coupling the sets of windings together in series, the result is an electrical machine with double the DC voltage.

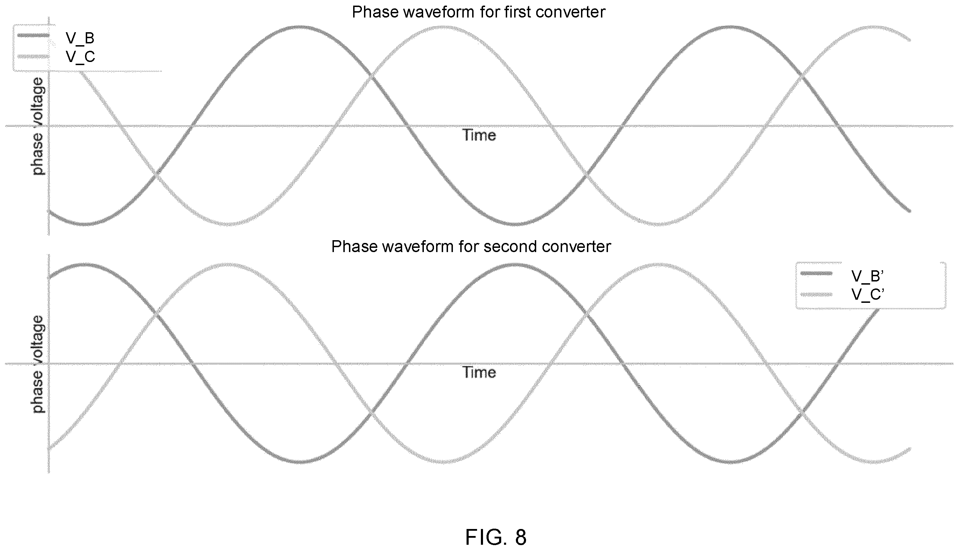

Example waveforms for the series configuration 500 are shown in Figure 8, which displays the phase voltage waveforms over time for each converter circuitry 320a, 320b.

Reconfiguring the windings of an electrical machine between a parallel configuration and a series configuration may provide situation-specific advantages, e.g. dependent on the amount of power available along the DC link.

There are several benefits that may be provided by at least some examples of the present disclosure, including that: the design of electrical machine can be optimized for a wide speed maximizing its power density; and/or the number of winding reconfiguration switches can be low, thereby increasing the power density of drive system; and/or by sequencing reconfiguration switching, voltage surges are avoided eliminating the risk of arcing and increasing the life of the switches; and/or the system can be implemented with a combination of existing machine and converter designs with minimum addition of switching devices.

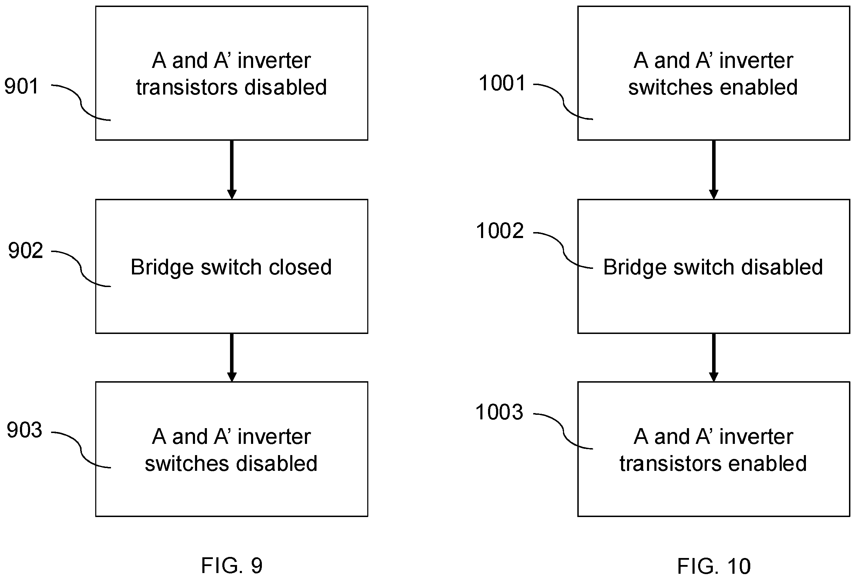

Figure 9 summarizes an example method for switching the example machine 300 from the parallel configuration to the series configuration. At step 901, the transistors T_AU, T_AL of the first converter circuit 320a, and the transistors T_A'U, T_A'L of the second converter circuit 320b are set to zero. This prevents the first converter 320a from affecting the phase of the A winding of the first set of windings 310a, and prevents the second converter 320b from affecting the phase of the A' winding of the second set of windings 310b. Next, at step 902, the bridging switch SW_S is closed. This connects the A phase of the first set of windings with the A' phase of the second set of windings. At step 903, the switch SW_A connecting the A phase of the first set of windings to the first converter circuit is opened, and the switch SW_A' connecting the A' phase of the second set of windings to the second converter circuit is opened. This severs the electrical coupling between the A phase of the first set of windings with the first converter circuit, and severs the electrical coupling between the A' phase of the second set of windings with the second converter circuit, whilst creating an electrical coupling between the A phase of the first set of windings with the A' phase of the second set of windings. As a result, the example machine 300 has been reconfigured to a series configuration.

Figure 10 summarizes an example method for switching the example machine 300 from the series configuration to the parallel configuration. At step 901, the switch SW_A connecting the A phase of the first set of windings to the first converter circuit is closed and the switch SW_A' connecting the A' phase of the second set of windings to the second converter circuit is closed. This allows for the respective converter circuits 320a, 320b to control the phases of all of the windings individually. Next, at step 902b, the bridging switch SW_S is opened. This electrically uncouples the A phase of the first set of windings form the A' phase of the second set of windings. At step 903b, the transistors T_AU, T_AL of the first converter circuit, and the transistors T_A'U, T_A'L of the second converter circuit are reactivated. This reactivates the portion of the first converter circuitry that is electrically coupled to the A phase of the first set of windings, and reactivates the portion of the second converter circuitry that is electrically coupled to the A' phase of the second set of windings. As a result of these steps, each phase of each set of windings is electrically coupled to the respective converter circuitry, and are electrically uncoupled from one another. Therefore, the example machine 300 has been reconfigured into a parallel configuration.

It will be appreciated by those skilled in the art that the disclosure has been illustrated by describing one or more specific examples thereof, but is not limited to these examples; many variations and modifications are possible, within the scope of the accompanying claims.

## Claims

1. A synchronous machine comprising:
a first set of n-phase windings, wherein n ≥ 3, and wherein the first set includes a first winding and n-1 other windings, each winding having a first end and a second end, and wherein the first ends of the windings of the first set are electrically coupled to a first star point;
a second set of n-phase windings, wherein n ≥ 3, and wherein the second set includes a first winding and n-1 other windings, each winding having a first end and a second end, and wherein the first ends of the windings of the second set are electrically coupled to a second star point;
first inverter circuitry electrically coupled to the second end of each of the n-1 other windings of the first set;
a first switch electrically coupled between the first inverter circuitry and the second end of the first winding of the first set;
second inverter circuitry electrically coupled to the second end of each of the n-1 other windings of the second set;
a second switch, distinct from the first switch, electrically coupled between the second inverter circuitry and the second end of the first winding of the second set;
a third switch electrically coupled between the second end of the first winding of the first set and the second end of a first winding of the second set; and control circuitry for switching the synchronous machine between a parallel configuration in which first switch is closed, the second switch is closed, and the third switch is open, and a series configuration in which the first switch is open, the second switch is open, and the third switch is closed.

2. The synchronous machine of claim 1, wherein the machine is switchable between the parallel configuration and the series configuration by actuating only the first switch, the second switch and the third switch.

3. The synchronous machine of claim 1 or 2, wherein n is a multiple of three.

4. The synchronous machine of any preceding claim, wherein the first winding of the second set is offset by 180 degrees from the first winding of the first set, and wherein each of the n-1 other windings of the first set is offset by 180 degrees from a respective winding of the n-1 other windings of the second set.

5. The synchronous machine of any preceding claim, wherein the machine is configured such that each winding of the first set has an opposite polarity to a respective winding of the second set that is offset by 180 degrees from the winding of the first set.

6. The synchronous machine of any preceding claim, wherein the n windings of the first set are uniformly spaced around 360 degrees, and the n windings of the second set are uniformly spaced around 360 degrees.

7. The synchronous machine of any preceding claim, further comprising a two-pole rotor.

8. The synchronous machine of any preceding claim, wherein the first inverter circuitry and second inverter circuitry are provided by respective converter circuitry that also comprises rectification circuitry for use when the machine is operating in a generating mode.

9. The synchronous machine of any preceding claim, wherein each of the first, second and third switches is a respective two-pole switch.

10. The synchronous machine of any preceding claim, wherein:
the first inverter circuitry comprises n sets of switches, each set of switches being configured for controlling current flow to a respective winding of the first set of winding when the machine is in the parallel configuration; and
the second inverter circuitry comprises n sets of switches, each set of switches being configured for controlling current flow to a respective winding of the second set of windings when the machine is in the parallel configuration; and
the control circuitry is configured to control the switching of the sets of switches.

11. The synchronous machine of claim 10, wherein the first switch is arranged on an electrical path between i) the set of switches configured for controlling current flow to the first winding of the first set of n-phase windings and ii) the second end of the first winding of the first set, and wherein the second switch is arranged on an electrical path between i) the set of switches configured for controlling current flow to the first winding of the second set of n-phase windings and ii) the second end of the first winding of the second set.

12. The synchronous machine of claim 10 or 11, wherein the control circuitry is configured, when the machine is in the series configuration, to control a current flow through the first winding of the first and second sets of windings by controlling the sets of switches of the first and second inverter circuitry that are for controlling current flow to the n-1 other windings of the first and second sets of windings.

13. The synchronous machine of any of claims 10 to 12, wherein the control circuitry is configured, when the machine is the series configuration, to deactivate the switches of the first inverter circuitry that are for controlling current flow to the first winding of the first set of windings, and to deactivate the switches of the second inverter circuitry that are for controlling current flow to the first winding of the second set of windings.

14. A method of operating the synchronous machine according to any preceding claim, comprising switching the wound field synchronous machine between the parallel configuration and the series configuration.

15. An aircraft engine comprising the synchronous machine according to any of claims 1 to 13.
